# EUROPEAN PATENT SPECIFICATION

(11) **EP 2 427 514 B1**
(45) Date of publication and mention of the grant of the patent: **13.09.2017**
(21) Application number: 10724573.0
(22) Date of filing: 23.04.2010
(51) Int. Cl.: C08J 9/00, C08J 9/232

(54) **EXPANDED ARTICLES WITH EXCELLENT RESISTANCE TO SOLAR RADIATION AND OPTIMUM THERMOINSULATING AND MECHANICAL PROPERTIES**
EXPANDIERTE ARTIKEL MIT AUSGEZEICHNETER BESTÄNDIGKEIT GEGENÜBER SONNENSTRAHLUNG UND OPTIMALEN WÄRMEISOLIERENDEN UND MECHANISCHEN EIGENSCHAFTEN
ARTICLES EXPANSÉS PRÉSENTANT UNE EXCELLENTE RÉSISTANCE AU RAYONNEMENT SOLAIRE ET DES PROPRIÉTÉS OPTIMALES D'ISOLATION THERMIQUE ET DES PROPRIÉTÉS MÉCANIQUES.

(30) Priority: 05.05.2009 IT MI20090764
(43) Date of publication of application: 14.03.2012
(73) Proprietor: versalis S.p.A., 20097 San Donato Milanese (MI) (IT)
(72) Inventor: FELISARI, Riccardo, I-46030 San Giorgio di Mantova (MN) (IT); PONTICIELLO, Antonio, I-37060 Mozzecane (VR) (IT); GHIDONI, Dario, I-46023 Gonzaga (MN) (IT)
(74) Representative: Bottero, Carlo
(86) International application number: PCT/IB2010/000923
(87) International publication number: WO 2010/128369

(56) References cited:
- EP-A2- 0 863 175
- DE-A1- 10 141 778
- GB-A- 2 448 468
- GB-A- 2 449 353
- US-A1- 2006 276 557
- US-A1- 2007 142 488
- US-A1- 2008 248 272
- DATABASE WPI Week 200453 Thomson Scientific, London, GB; AN 2004-546835 XP002554613 & JP 2004 196907 A (JSP CORP) 15 July 2004 (2004-07-15)

## Description

The present invention relates to thermoresistant expanded articles and the vinyl aromatic polymers compositions for their preparation.

More specifically, the present invention relates to thermo-insulating expanded articles prepared from expandable vinyl aromatic polymers, for example expandable styrene polymers, which, after expansion, have a reduced thermal conductivity also at low density, for example lower than 20 g/l.

All the conditions specified in the description should be considered as being preferred conditions even if not expressly indicated.

Expandable vinyl aromatic polymers and, among these, in particular expandable polystyrene (EPS), are known products and used for a long time for preparing expanded articles which can be adopted in various applicative areas, among which, one of the most important is thermal insulation.

These expanded products are obtained by first swelling the polymer granules, in a closed environment, impregnated with an expandable fluid, for example an aliphatic hydrocarbon such as pentane or hexane, and then molding the swollen particles contained inside a mould, by means of the contemporaneous effect of pressure and temperature. The swelling of the particles is generally effected with vapour, or another gas, maintained at a temperature slightly higher than the glass transition temperature (Tg) of the polymer.

As already mentioned, a particular applicative field of expanded polystyrene is that of thermal insulation in the building industry where it is generally used in the form of flat sheets. The flat expanded polystyrene sheets are normally used with a density of about 30 g/l as the thermal conductivity of the polymer has a minimum at these values. It is not advantageous to fall below this limit, even if it is technically possible, as it causes a drastic increase in the thermal conductivity of the sheet which must be compensated by an increase in its thickness. In order to avoid this drawback, suggestions have been made to fill the polymer with athermanous materials such as graphite, carbon black or aluminium. Athermanous materials are in fact capable of interacting with the radioactive flow, reducing its transmission and thus increasing the thermal insulation of the expanded materials in which they are contained.

European patent 620,246, for example, describes a process for preparing granules of expandable polystyrene containing an athermanous material distributed on the surface or, alternatively, incorporated inside the particle itself.

International patent application WO 1997/45477 describes compositions based on expandable polystyrene comprising a styrene polymer, from 0.05 to 25% of carbon black of the lamp black type, and from 0.6 to 5% of a brominated additive to make the product fireproof.

Japanese patent application JP 63183941 describes the use of graphite for improving the insulating capacity of polystyrene foams.

Patent application JP 60031536 describes the use of carbon black in the preparation of expandable polystyrene resins.

International patent application WO 2006/61571 describes compositions based on expandable polystyrene comprising a styrene polymer having a weight average molecular weight Mw of 150,000-450,000, from 2 to 20% by weight of an expanding agent and from 0.05 to less than 1% of carbon black, with a surface area ranging from 550 to 1,600 m²/g.

The filled end-products obtained by the expansion and moulding of polystyrene must generally be protected against direct exposure to solar rays or, more generally, to hot environments or environments subject to heat irradiation. An improved thermal insulation, in fact, leads to a lower heat dissipation capacity. Furthermore, the athermanous fillers normally used have a high absorption coefficient and "ε" emission in the wave-lengths typical of solar radiation.

The high absorption and low heat dissipation capacity cause a high temperature increase which can lead to a strong deformation of the end-products.

A method used for the solution of this problem is the application of a coating which is capable of reflecting solar radiation. This method, however, is not very practical especially when laying expanded sheets in open environments, for example in heat insulation panelling applied to roofs and perimetric walls.

An alternative method is the application of reflecting pigments contained inside the resin or applied to the surface of the end-product.

Additives have been found, for example, which, when applied to sheets of polyethylene, allow an improvement in the resistance to solar radiation (see Nilsson et al, "Solar-Reflecting Material for Radiative Cooling Applications: ZnS Pigmented Polyethylene", Proc. SPIE Vol. 1727, p. 249-261, "Optical Materials Technology for Energy Efficiency and Solar Energy Conversion XI: Selective Materials, Concentrators and Reflectors, Transparent Insulation and Superwindows").

Another example consists in spreading/spraying onto the insulating sheets, a liquid additive capable of reflecting solar radiations, consisting of an aqueous suspension of particles of ceramic material of the "Super Therm" type, produced by Superior Products International.

The use of these additives, however, generally implies a significant increase in the preparation costs of these end-products. If applied to the surface, a supplementary process step is necessary. If distributed in the expandable polymer, and then applied over the whole volume of the expanded end-product, the yield is extremely low as only the part of the additive positioned on the surface of the end-product has an active role in reflecting the striking solar light.

Another technology, in the development phase, and equally as onerous, consists in coupling a sheet of standard EPS, i.e. without athermanous agents and generally white, on the dark sheet containing athermanous agents, so that the surface exposed to solar radiation is only expandable polystyrene without any athermanous agent.

The Applicant has now found that it is possible to prepare expanded articles based on vinyl aromatic polymers and having an improved resistance to exposure to solar irradiation, at the same time maintaining good insulting and mechanical properties, using polymerization formulations which allow the desired result to be obtained.

An object of the present invention therefore relates to expanded articles with excellent resistance to solar irradiation, good thermo-insulating and mechanical properties which comprise an expanded polymeric (vinyl aromatic) matrix, obtained by expansion and sintering of beads/granules of a vinyl aromatic (co)polymer, in which a filler is homogeneously dispersed, which comprises:
a. 0.1-10% by weight, preferably 0.2-3%, of coke having an average diameter (MT50) ranging from 2 to 20 µm and/or synthetic, natural or expanded graphite having an average diameter (MT50) ranging from 1 to 20 µm;
b. 0-5% by weight, preferably 0.1-2%, of a self-extinguishing brominated additive possibly thermally stabilized;
c. 0-2% by weight, preferably 0.1-1.3%, of a synergist for the self-extinguishing additive (b);
d. 0-10% by weight, preferably 0.15-6%, of at least one inorganic additive active within the wave-lengths ranging from 100 to 20,000 cm⁻¹;
e. 1-10% by weight, preferably 1.5-8%, of an expanding agent;
wherein said percentages are calculated with respect to the overall weight of the bead/granule and wherein the complement to 100% is a polymeric matrix (f) consisting of (f1) a copolymer of styrene and from 0.01 to 15% by weight, with respect to the copolymer, of at least one vinyl aromatic comonomer substituted in the ring or on the vinyl group and/or (f2) a mixture of polystyrene and up to 10% by weight, with respect to the mixture, of a thermoplastic polymer compatible with polystyrene and having a Tg (glass transition temperature) > 100°C.

Said vinyl aromatic comonomer substituted in the ring or on the vinyl group, for example α-methylstyrene or para-methylstyrene, ranges preferably from 0.01 to 10%, more preferably from 0.1 to 8%, with respect to the copolymer.

These expanded articles are characterized by a density ranging from 5 to 50 g/l, preferably from 10 to 25 g/l, and have an excellent thermal insulation capacity expressed by a thermal conductivity ranging from 25 to 50 mW/mK, preferably from 30 to 45 mW/mK, which is generally even more than 10% lower than that of equivalent expanded articles obtained from unfilled materials currently on the market, for example EXTIR A-5000 of Polimeri Europa S.p.A.. Furthermore, even if exposed to solar irradiation or another analogous heat source for long periods of time, for example up to 10 days, these expanded articles do not substantially undergo any deformation induced by heat or they are subject to a much more reduced deformation with respect to that suffered by equivalent expanded articles available on the market, obtained from polymeric compositions described in literature.

Thanks to these characteristics of the expandable polymers object of the present invention, it is possible to prepare thermo-insulating articles with a significant saving of material or, for example, to prepare sheets having a lesser thickness than those produced with unfilled traditional polymers, with a consequent saving of space and product.

Examples of thermo-insulating expanded articles according to the present invention are flat sheets for thermal insulation in building having, for example, a density ranging from 8 to 50 g/l and a thickness ranging from 1 to 50 cm.

Expanded extruded sheets of vinyl aromatic polymers comprising a continuous cellular matrix consisting of:
(f1) a vinyl aromatic copolymer comprising styrene and 0.001 to 15% by weight, preferably from 0.01 to 10%, more preferably from 0.1 to 8%, with respect to the copolymer, of at least one vinyl aromatic comonomer substituted in the ring or on the vinyl group, for example α-methylstyrene or para-methylstyrene; and/or
(f2) a mixture of polystyrene and up to 10% by weight, with respect to the mixture, of a thermoplastic polymer compatible with polystyrene and having a Tg (glass transition temperature) > 100°C,
fall within the definition of expanded articles, wherein said expanded sheet has a density ranging from 10 to 200 g/l, an average cell size of the cellular matrix ranging from 0.05 to 1.00 mm and comprises the additives from (a) to (d) in the quantities indicated above.

The sheets can be obtained, for example, by extrusion, according to what is described, for example, in international patent application WO 2006/128656, using a quantity of expanding agent capable of providing the above-mentioned density.

A further object of the present invention relates to beads or granules based on expandable vinyl aromatic polymers suitable for preparing the expanded articles indicated above and which comprise:
A. a polymeric matrix (vinyl aromatic) essentially consisting of:
   - a copolymer of styrene and at least one vinyl aromatic comonomer substituted in the ring or on the vinyl group (f1):
      and/or
         - a mixture of polystyrene and up to 10% by weight, with respect to the mixture, of a thermoplastic polymer compatible with polystyrene and having a Tg (glass transition temperature) > 100°C (f2);
      wherein said vinyl aromatic comonomer substituted in the ring or on the vinyl group, for example α-methylstyrene or para-methylstyrene, ranges from 0.001 to 15% by weight, preferably from 0.01 to 10%, more preferably from 0.1 to 8%, with respect to the copolymer; and
B. a filler comprising:
   a. 0.1-10% by weight, preferably 0.2-3%, of coke having an average diameter (MT50) ranging from 2 to 20 µm and/or synthetic, natural or expanded graphite having an average diameter ranging from 1 to 20 µm;
   b. 0-5% by weight, preferably 0.1-2%, of a self-extinguishing brominated additive possibly thermally stabilized;
   c. 0-2% by weight, preferably 0.2-1.3%, of a synergist for the self-extinguishing additive (b);
   d. 0-10% by weight, preferably 0.15-6%, of at least one inorganic additive active within the wave-lengths ranging from 100 to 20,000 cm⁻¹;
   e. 1-10% by weight, preferably 1.5-8%, of an expanding agent;
   wherein the percentages are calculated with respect to the overall weight of the composition A and B.

The beads or granules used for preparing the expanded articles object of the present invention can be obtained, as better illustrated hereunder, by means of:
- a process in suspension, which comprises the dissolution/dispersion of the filler (a)-(d) in the monomeric phase, followed by polymerization in aqueous suspension and the addition of the expanding agent (e); or
- a direct extrusion process, i.e. feeding a mixture of granules of the vinyl aromatic (co)polymer and filler (a)-(d) (as such or in master-batch form) and optionally the polymer compatible with the mixture (f2), directly to an extruder, in which an injection point of the expanding agent (e) is envisaged.

Alternatively, the copolymer can come already in the molten state from a polymerization plant, subsequently adding the filler (a)-(d) and possibly the compatible polymer of the mixture (f2). The expanding agent (e) is subsequently fed and the relative product is then cooled and passed through a die for the direct preparation of plates, tubes, expanded sheets.

As another alternative, the polymeric composition thus obtained can be sent to a cutting die under pressure (for example, according to the procedure described in US patent 7,320,585).

The term "vinyl aromatic comonomer", as used in the present description and claims, essentially means a product corresponding to the following general formula: 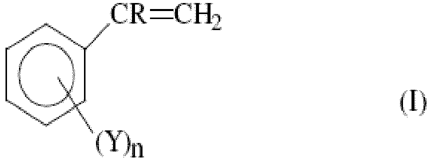 wherein R is a methyl group, n is zero or an integer ranging from 1 to 5 and Y is a halogen, such as chlorine or bromine, or an alkyl or alkoxyl radical having 1 to 4 carbon atoms.

Examples of vinyl aromatic comonomers having the general formula identified above, are:
α-methylstyrene, para-methylstyrene, methylstyrene, ethylstyrene, butylstyrene, dimethylstyrene, mono-, di-, tri-, tetra- and penta-chlorostyrene, bromo-styrene, methoxystyrene, acetoxystyrene, etc. Preferred vinyl aromatic comonomers are α-methylstyrene and para-methylstyrene.

The styrene, used for preparing the polystyrene of the mixture (f2) or copolymer (f1), can be used alone or in a mixture up to 50% by weight with other copolymerizable monomers. Examples of said monomers are (meth)acrylic acid, C₁-C₄ alkyl esters of (meth)acrylic acid such as methyl acrylate, methyl methacrylate, ethyl acrylate, ethyl methacrylate, isopropyl acrylate, butyl acrylate, amides and nitriles of (meth)acrylic acid such as acrylamide, methacrylamide, acrylonitrile, methacrylonitrile, butadiene, ethylene, divinyl benzene, maleic anhydride, etc.. Preferred copolymerizable monomers are acrylonitrile, methyl methacrylate.

The coke is available as a finely divided powder with a particle diameter (MT50) of the powder particles ranging from 2 to 20 µm. The particle diameter (MT50) is measured with a laser granulometer and is the diameter which corresponds to 50% by weight of particles having a lower diameter and 50% by weight of particles having a higher diameter.

The coke is produced from the pyrolysis of organic material and at least partly passes through a liquid or liquid-crystalline state during the carbonization process. Preferably, the starting organic material is petroleum, coal or lignite.

More preferably, the coke used in the preparation of the polymeric compositions in granules, object of the present invention, is the carbonization product of the fraction of high-boiling hydrocarbons coming from the distillation of oil, conventionally known as residual heavy fraction. In particular, the coke is obtained starting from the coking of the residual heavy fraction, an operation carried out at high temperature which again produces some light fractions and a solid (petroleum coke). The petroleum coke thus obtained is calcined at a temperature ranging from 1,000 to 1,600°C (calcined coke or coke).

If a heavy residual fraction rich in aromatic components is used, a coke is produced after calcination at 1,800-2,200°C with a crystalline needle structure (needle coke).

More information on coke, the production methods and characterization of the various grades commercially available (green coke, coal-derived pitch coke, delayed coke, fluid coke, needle coke, premium coke, calcined coke, shot, spange, etc.) is available online, in the website goldbook.iupuac.org or in Pure Appl. Chem., 1995, vol. 67, Nr. 3, pages 473-506 "Recommended terminology for the description of carbon as a solid (IUPAC Recommendations 1995)".

The graphite can be natural/synthetic or expanded. Natural graphite can be used directly, after grinding and possible purification treatment. Synthetic graphite is generally obtained from coke, after high-temperature thermal treatment (>2500 K).

Expanded graphite is obtained from natural or synthetic graphite by the intercalation of suitable intercalating agents (for example, oleum and/or nitric acid) and subsequent thermal expansion effected rapidly.

The natural or synthetic graphite can have an average particle diameter (MT50) ranging from 1 to 20 µm, with a surface area ranging from 5 to 50 m²/g. The expanded graphite can have an average particle diameter ranging from 1 to 20 µm, with a surface area ranging from 15 to 1,000 m²/g.

The inorganic additive (d) comprises one or more inorganic materials which have at least an absorption band between 100 and 20,000 cm⁻¹, as revealed by a spectrum analyzer within near-medium infrared.

Examples of these additives are titanates, titanium oxides, silicon oxide, such as aerosilica and silica flour, aluminium oxides and hydroxides, barium sulphate, silicates such as aluminosilicates, calcium silicates (wollastonite) and magnesium silicates (talc), carbonates such as calcium and/or magnesium carbonate, calcium sulfates, calcium and zinc oxide, bentonite, etc. Among these, calcium carbonate, talc, wollastonite and titanium oxide are preferred.

The thermoplastic polymer, compatible with polystyrene, and having a Tg > 100°C, essentially consists of polyester resins, such as PET or PBT, or polyphenylene-oxide resins, all easily available on the market.

Any expanding agent (e) capable of being englobed in the vinyl aromatic polymeric matrix can be used to prepare the expanded articles object of the present invention. Typical examples are aliphatic hydrocarbons, freon, carbon dioxide, alcohols such as ethyl alcohol, water, etc..

The expanding agents can be selected from aliphatic or cyclo-aliphatic hydrocarbons containing from 3 to 6 carbon atoms such as n-pentane, iso-pentane, cyclopentane or mixtures thereof; halogenated derivatives of aliphatic hydrocarbons containing from 1 to 3 carbon atoms, such as, for example, dichlorodifluoromethane, 1,2,2-trifluoroethane, 1,1,2-trifluoroethane; carbon dioxide; water; and ethyl alcohol.

The filler used for preparing the beads or granules of expandable polymers, object of the present invention, as also the expanded articles, can comprise conventional additives such as pigments, stabilizing agents, nucleating agents, flame-retardant systems, antistatic agents, release agents, etc.. In particular, the filler can comprise a flame-retardant system containing up to 5% by weight of a self-extinguishing brominated additive containing at least 30% by weight of bromine and up to 2% by weight of a synergic product containing at least one C-C or O-O labile bond, as described hereunder.

Flame-retardants particularly suitable for the present invention are aliphatic, cyclo-aliphatic compounds, brominated aromatic compounds, such as hexabromocyclododecane (EBCD), pentabromomonochlorocyclohexane and pentabromophenyl allyl ether.

Synergic products which can be used are dicumyl peroxide (DCP), cumene hydroperoxide, 3,4-dimethyl-3,4-diphenyl-hexane, 3,4-dimethyl-3,4-diphenyl butane, 3,6,9-triethyl-3,6,9-trimethyl-1,4,7-triperoxyinonane.

The beads or granules, object of the present invention, can be prepared by polymerization in aqueous suspension with inorganic salts of phosphoric acid, for example, tri-calcium phosphate or magnesium pyrophosphate, as suspending agents. These salts can be added to the polymerization mixture either already finely subdivided or synthesized in situ by reaction, for example, between sodium pyrophosphate and magnesium sulphate.

Said inorganic salts are assisted in their suspending action by anionic surface-active agents, for example sodium dodecylbenzene sulfonate or their precursors such as sodium metabisulfite, as described in US patent 3,631,014.

The polymerization can also be carried out in the presence of organic suspending agents such as polyvinylpyrrolidone, polyvinyl alcohol, etc.

According to the process in suspension, the polymerization reaction is triggered by an initiator system. The initiator system normally comprises two peroxides, the first with a halving time of one hour at 85-95°C and the other with a halving time of one hour at 110-120°C. Examples of these initiators are tert-butylperoxy-2-ethylhexanoate and tert-butylperbenzoate.

The vinyl aromatic (co)polymer which is obtained has an average molecular weight Mw ranging from 50,000 to 250,000, preferably from 70,000 to 200,000. In general, more details on procedures for the preparation of expandable vinyl aromatic polymers in aqueous suspension or, more generally, polymerization in suspension, can be found in Journal of Macromolecular Science, Review in Macromolecular Chemistry and Physics C31 (263) 215-299 (1991).

In order to improve the stability of the suspension, it is possible to increase the viscosity of the reagent solution of vinyl aromatic monomers, to be suspended in water, by dissolving vinyl aromatic polymer therein, up to a concentration of 1 to 30% by weight, preferably from 5 to 20%, calculated with respect to the monomers. The solution can be obtained by dissolving a preformed polymer in the reagent mixture (for example fresh polymer or waste-products from previous polymerizations and/or expansions) or by a mass pre-polymerization of the monomer, or mixture of monomers, until the previously mentioned concentrations are obtained, and subsequently continuing the polymerization in aqueous suspension in the presence of the remaining additives.

During the polymerization in suspension, polymerization additives are used, according to methods well-known to experts in the field, which are typically those for producing expandable vinyl aromatic polymers, such as stabilizing agents of the suspension, chain-transfer agents, expansion co-adjuvants, nucleating agents, plasticizers, etc.

The expanding agents are preferably added during the polymerization phase, or subsequently by means of the resuspension technology. In particular, the latter comprises the following phases:
- polymerizing the monomers in aqueous suspension, in the presence of the filler;
- separating the beads thus obtained;
- re-suspending the beads in water and heating until their spherical form is obtained;
- adding the expanding agents to the suspension and keeping the beads in contact with the same until impregnation; and
- re-separating the beads.

At the end of the polymerization, substantially spherical beads/granules of expandable polymer are obtained, with an average diameter ranging from 0.2 to 2 mm, preferably from 1 to 1.5 mm, in which said filler is homogeneously dispersed.

The beads are then discharged from the polymerization reactor and washed, in continuous or batchwise, with non-ionic surface-active agents or, alternatively, with acids, as described in US patent 5,041,465. The polymer beads can be subsequently treated thermally with hot air ranging from 30 to 60°C.

The granules or beads, object of the present invention, can also be prepared by polymerization in continuous mass according to a method which comprises the following steps in series:
I. mixing the vinyl aromatic (co)polymer in granular form or already in the molten state, with an average molecular weight Mw ranging from 50,000 to 250,000, preferably from 70,000 to 200,000, with the filler (a)-(d) and optionally with the compatible polymer and/or further additives;
II. optionally, if not already in the molten state, bringing the polymeric mixture to a temperature higher than the melting point of the vinyl aromatic (co)polymer;
III. incorporating the expanding agent (e) and possibly a part or all of said further additives in the molten polymer;
IV. mixing the polymeric composition thus obtained by means of static or dynamic mixing elements; and
V. granulating the composition thus obtained in a device which comprises a die, a cutting chamber and a cutting system.

At the end of the granulation, granules of expandable polymer can be obtained with a substantially spherical form having an average diameter ranging from 0.2 to 2 mm, preferably from 1 to 1.5 mm, in which the overall filler is homogeneously dispersed.

According to the present invention, step (I) can be effected by feeding the polymeric granule already formed, possibly mixed with processing waste products, into an extruder with the filler. The single components are mixed therein and the polymeric portion is subsequently melted and an expanding agent and other possible additives are then added.

Alternatively, the polymer can be used already in the molten state, coming directly from the polymerization plant in solution, in particular from the relative devolatilization unit, according to a process known to experts in the field as "continuous mass process". The molten polymer is fed to suitable devices, for example a dynamic mixer or a static mixer, where it is mixed with the filler, with the expanding agent and possibly with the compatible polymer and further additives. It is then extruded to give the product in expandable granules, object of the present invention.

The granules thus obtained can be re-baked at a temperature lower than or equal to the glass transition temperature (Tg) or slightly higher, for example the Tg increased by up to 8°C, possibly under pressure. A detailed method for preparing vinyl aromatic polymers in continuous mass, is described in international patent application WO 03/53651.

In general, it is possible to incorporate the filler or compatible polymer in one or more master-batches, based on a vinyl aromatic polymer having an average molecular weight Mw ranging from 50,000 to 250,000, preferably from 70,000 to 200,000, to facilitate their mixing with the polymeric stream and to simplify the plant management. In the master-batch, the content of filler ranges from 15 to 70% by weight.

In particular, in the case of polymerization in aqueous suspension, the master-batch in pellets can be dissolved in the vinyl aromatic monomer. In the case of mass polymerization, on the other hand, the master-batch in pellet form can be mixed with the granule or with the polymer in the molten state coming from polymerization in solution.

Even more specifically, in the case of polymerization in continuous mass, the master-batch in pellets can be dissolved in the vinyl aromatic monomer/solvent mixture before this is fed to the polymerization reactor in solution.

At the end of the polymerization, whether it be in suspension or continuous mass, the expandable beads or granules obtained are subjected to pre-treatment which is normally applied to conventional expandable compositions and which essentially consists in:
1. covering the beads or granules with a liquid antistatic agent such as amines, ethoxylated tertiary alkylamines, ethylene oxide/propylene oxide copolymers, etc.. Said agent allows the coating to adhere and facilitates the screening of the beads prepared in suspension;
2. applying the coating to said beads or granules, said coating essentially consisting of a mixture of mono-, di- and tri-esters of glycerine (or other alcohols) with fatty acids, and metal stearates such as zinc and/or magnesium stearate.

Some illustrative and non-limiting examples are provided hereunder for a better understanding of the present invention and for its embodiment.

### Evaluation method of the deformation induced by solar radiation

The evaluation of the deformation induced by solar irradiation was first effected by placing the end-products (polystyrene panels) on exposure devices tilted with respect to the horizontal and exposed to the action of solar rays.

Expandable polystyrene panels (EPS) were produced, having a size of 900 mm x 500 mm x 100 mm. Said panels were applied on the above exposure devices for a period of 15 days. The deformation and shrinkage degree of the end-products, induced by solar exposure, was then observed.

It was observed that the products filled with coke, as in Example 1, did not reveal any deformation or shrinkage, whereas other products filled with carbon black having a surface area outside the limits claimed, for example the carbon black Printex 85, were deformed and shrunk by over 5% on the longer side.

When applied contemporaneously to different materials, the method allows the deformation resistance of the various materials to be distinguished. The test, however, is not repeatable as it depends on the atmospheric conditions which can neither be predicted nor repeated.

On the basis of this critical aspect, a laboratory test was prepared, using an infrared-ray lamp, described hereunder, and which will be subsequently referred to as "lamp test".

After expansion and moulding, the material was cut with a hot wire to obtain parallelepiped test samples, having dimensions of 190 mm x 90 mm x 16 mm. The test sample thus obtained was decorticated by means of a rotating blade cutting device on two surfaces having a maximum area, in order to obtain test samples having a final thickness equal to 13 mm.

The test samples thus obtained were subjected to radiation coming from a 375 W infrared lamp (Philips Infrarood model R125 IR CH, made in Holland), after a preheating phase of the lamp of 15 minutes. The distance between the test sample and lamp is established at 440 mm. The test samples are arranged so as to expose one of the two surfaces having a maximum area to infrared radiation. This surface is positioned perpendicularly and centred with respect to the line joining the bulb filament with the centre of the test sample.

After 10 minutes of exposure, the test samples are withdrawn and left to cool to room temperature for at least one hour.

The shrinkage and deformation measurement is effected by immersion of the test sample in a container filled with isopropyl alcohol. The volume of the end-product is calculated on the basis of the shift in the volume of liquid. The damage is calculated as the difference between the volume of the end-product before and after exposure to the lamp.

This difference in volume is due to both the shrinkage of the end-product and to the formation of holes. Both types of damage cause the material to collapse with a consequent reduction in the volume of the end-product.

### EXAMPLE 1

A mixture is charged into a closed and stirred container, consisting of 150 parts by weight of water, 0.2 parts of sodium pyrophosphate, 93 parts of styrene, 7 parts of α-methylstyrene, 0.25 parts of tert-butylperoxy-2-ethylhexanoate, 0.7 parts of EBCD, 0.2 parts of DCP, 0.25 parts of tert-butyl perbenzoate and 1.5 parts of Calcinated Coke 4357 sold by the company Asbury Graphite Mills Inc. (USA), having a particle diameter MT50% of about 5 µm, a BET of about 20 m²/g and 0.2 parts of CaCO₃, in the form of nanoparticles (average particle diameter 70 nm) called MICROMAC UFC, sold by Macri Chimica. The mixture is heated under stirring to 90°C.

After about 2 hours at 90°C, 4 parts of a solution of polyvinylpyrrolidone at 10% are added. The mixture is heated to 100°C, still under stirring, for a further 2 hours, 7 parts of a 70/30 mixture of n-pentane and i-pentane are added, the whole mixture is heated for a further 4 hours to 125°C, it is then cooled and the batch is discharged. The composition of the polymer proved to have 6% of α-methylstyrene.

The beads of expandable polymer thus produced are subsequently collected and washed with demineralized water containing 0.05% of a non-ionic surface-active agent consisting of fatty alcohol condensed with ethylene oxide and propylene oxide, sold by Huntsman under the trade-name of Empilan 2638. The beads are then dried in a warm air flow, 0.02% of a non-ionic surface-active agent is added, consisting of a condensate of ethylene oxide and propylene oxide on a glycerine base, sold by Dow (Voranol CP4755) and they are subsequently screened separating a fraction with a diameter ranging from 1 to 1.5 mm.

This fraction proved to represent 40%, 30% being the fraction between 0.5 and 1 mm, 15% the fraction between 0.2 and 0.5 mm, and 15% the gross fraction, between 1.5 and 3 mm.

0.2% of glyceryl monostearate and 0.1% of zinc stearate are then added to the fraction of 1 to 1.5 mm.

The product is pre-expanded with vapour at a temperature of 100°C, left to age for 1 day and used for the moulding of blocks (having dimensions of 1040 x 1030 x 550 mm) .

The blocks were then cut to prepare flat sheets on which the thermal conductivity was to be measured. The thermal conductivity, measured after 5 days of residence in an oven at 70°C, was 32.0 mW/mK, whereas that of a sheet having an equal density (18 g/l), prepared with a traditional reference product (EXTIR A-5000)m was 38 mW/mK. The sheet was subjected to the lamp test for 10' at a distance of 44 cm from the lamp: no deformation was observed. The self-extinguishing test B2 was also effected on the sheet: the test sample passed the test.

### Comparative example 1

The same procedure is adopted as described in Example 1 except that the coke is substituted with 3 parts of carbon black Printex 85 produced by Degussa and the quantity of EBCD is increased to 2% by weight and the quantity of DCP to 0.4% by weight.

The Printex 85 has a particle diameter of primary particles of about 16 nm, an iodine number of about 170 mg/g (according to ASTM 1510-08) and a surface area (BET) of about 200 m²/g.

The sheet obtained has practically the same thermal conductivity as Example 1, i.e. 32.0 mW/mK with a density of 18 g/l. The sheet was subjected to the lamp test for 10' of 44 cm from the lamp: there was extensive damage of about 5,000 mm³.

### EXAMPLE 2

94.5 parts of polystyrene N1782 produced by Polimeri Europa; 2 parts of ethylene-bis-stereamide; 7.5 parts of Calcinated Coke 4357 used in Example 1, are mixed in a twin-screw extruder. The extruded product is used as master-batch, in the production of the expandable compositions of the present invention illustrated hereunder.

89.8 parts of ethylbenzene, 730.0 parts of styrene, 56.2 parts of α-methylstyrene and 0.2 parts of divinylbenzene are fed to a stirred reactor.

123.8 parts of the master-batch prepared as indicated above are fed into the reactor and dissolved (total: 1,000 parts). The reaction is then carried out at 125°C with an average residence time of 2 hours. The fluid composition at the outlet is then fed to a second reactor where the reaction is completed at 135°C with an average residence time of 2 hours.

The resulting composition, which is hereafter referred to as "Composition (A)", having a conversion of 72%, is heated to 240°C and subsequently fed to the devolatilizer to remove the solvent and residual monomer. The resulting polymeric composition is characterized by a glass transition temperature of 104°C, a melt flow index (MFI 200°C, 5 kg) of 8 g/10', a molecular weight Mw of 200,000 g/mol and a Mw/Mn ratio of 2.8, wherein Mw is the weight average molecular weight and Mn is the number average molecular weight.

Composition (A) is fed, from the devolatilizer, to a heat exchanger to lower its temperature to 170°C.

120.7 parts of polystyrene N2982 produced by Polimeri Europa, 24.2 parts of BR-E 5300 (stabilized hexabromocyclododecane, sold by Chemtura) and 5.1 parts of Perkadox 30® (2,3-dimethyl-2,3-diphenylbutane), sold by Akzo Nobel) for a total of 150 parts (additive), are fed to a second twin-screw extruder. A gear pump increases the feeding pressure of this molten additive to 260 barg. 47 parts of a mixture of n-pentane (75%) and iso-pentane (25%) are then pressurized and injected into the feeding of the additive. The mixing is completed with the use of static mixers, at a temperature of about 190°C. The composition thus obtained is described hereunder as "Composition (B)".

Composition (B) is added to 850 parts of Composition (A) coming from the heat exchanger. The ingredients are then mixed by means of static mixing elements for a calculated average residence time of 7 minutes. The composition is then distributed to the die, where it is extruded through a number of holes having a diameter of 0.5 mm, immediately cooled with a jet of water and cut with a series of rotating knives (according to the method described in US patent 7,320,585).

The pressure in the granulation chamber is 5 barg and the shear rate is selected so as to obtain granules having an average diameter of 1.2 mm. Water is used as cooling spray liquid and nitrogen is used as carrier gas.

The resulting granules are dried with a centrifugal drier and then covered with a coating. The coating is prepared by adding to the granules 3 parts of glyceryl monostearate, 1 part of zinc stearate and 0.2 parts of glycerine per 1,000 parts of dried granules. The additives of the coating are mixed with the granulate by means of a continuous screw mixer.

The expansion of the granules and moulding were effected as described in Example 1. The thermal conductivity proved to be 32.5 mW/mK.

Some of the sheets, obtained as described in Example 1, are put in an oven at 70°C for 2 days. Test samples are then collected (9cm x 19cm x 2cm) for the fire behaviour test according to the regulation DIN 4102. The test samples pass the test. The sheet was subjected to the lamp test for 10' at a distance of 44 cm from the lamp: no deformation was observed.

### EXAMPLE 3

70.5 parts of polystyrene N1782 produced by Polimeri Europa; 2 parts of ethylene-bis-stereamide; 7.5 parts of Calcinated Coke 4357 and 20 parts of CaCO₃ (the same as Example 1) are mixed in a twin-screw extruder. The extruded product is used as master-batch, in the production of the expandable compositions of the present invention illustrated hereunder.

89.8 parts of ethylbenzene, 730.0 parts of styrene, 56.2 parts of α-methylstyrene and 0.2 parts of divinylbenzene are fed to a stirred reactor.

123.8 parts of the master-batch prepared as indicated above are fed into the reactor and dissolved (total: 1,000 parts). The reaction is then carried out at 125°C with an average residence time of 2 hours. The fluid composition at the outlet is then fed to a second reactor where the reaction is completed at 135°C with an average residence time of 2 hours.

The resulting composition, which is hereafter referred to as "Composition (A)", having a conversion of 72%, is heated to 240°C and subsequently fed to the devolatilizer to remove the solvent and residual monomer. The resulting polymeric composition is characterized by a glass transition temperature of 104°C, a melt flow index (MFI 200°C, 5 kg) of 8 g/10', a molecular weight Mw of 200,000 g/mol and a Mw/Mn ratio of 2.8.

Composition (A) is fed, from the devolatilizer, to a heat exchanger to lower its temperature to 170°C.

150 parts of polystyrene N2982 (additive) produced by Polimeri Europa are fed to a second twin-screw extruder. A gear pump increases the feeding pressure of this molten additive to 260 barg. 47 parts of a mixture of n-pentane (75%) and iso-pentane (25%) are then pressurized and injected into the feeding of the additive. The mixing is completed with the use of static mixers, at a temperature of about 190°C. The composition thus obtained is described hereunder as "Composition (B) ".

The same procedure is then followed as described in Example 2 until sheets having a density of 18 g/l are obtained.

The thermal conductivity proved to be 32.5 mW/mK.

The sheet was subjected to the lamp test for 10' at a distance of 44 cm from the lamp: no deformation was observed.

### EXAMPLE 4

83 parts of polystyrene N1782 produced by Polimeri Europa; 2 parts of ethylene-bis-stereamide; 7.5 parts of Calcinated Coke 4357 used in Example 1 and 7.5 parts of talc HTP2 produced by Imi Fabi, are mixed in a twin-screw extruder. The extruded product is used as master-batch, in the production of the expandable compositions of the present invention illustrated hereunder.

89.8 parts of ethylbenzene, 730.0 parts of styrene, 56.2 parts of α-methylstyrene and 0.2 parts of divinylbenzene are fed to a stirred reactor.

123.8 parts of the master-batch prepared as indicated above are fed into the reactor and dissolved (total: 1,000 parts). The reaction is then carried out at 125°C with an average residence time of 2 hours. The fluid composition at the outlet is then fed to a second reactor where the reaction is completed at 135°C with an average residence time of 2 hours.

The resulting composition, which is hereafter referred to as "Composition (A)", having a conversion of 72%, is heated to 240°C and subsequently fed to the devolatilizer to remove the solvent and residual monomer. The resulting polymeric composition is characterized by a glass transition temperature of 104°C, a melt flow index (MFI 200°C, 5 kg) of 8 g/10', a molecular weight Mw of 200,000 g/mol and a Mw/Mn ratio of 2.8.

Composition (A) is fed, from the devolatilizer, to a heat exchanger to lower its temperature to 170°C.

120.7 parts of polystyrene N2982 produced by Polimeri Europa, 24.2 parts of BR-E-5300 (stabilized hexabromocyclododecane, sold by Chemtura) and 5.1 parts of Perkadox 30® (2,3-dimethyl-2,3-diphenylbutane), sold by Akzo Nobel) for a total of 150 parts (additive), are fed to a second twin-screw extruder. A gear pump increases the feeding pressure of this molten additive to 260 barg. 47 parts of a mixture of n-pentane (75%) and iso-pentane (25%) are then pressurized and injected into the feeding of the additive. The mixing is completed with the use of static mixers, at a temperature of about 190°C. The composition thus obtained is described hereunder as "Composition (B)".

The resulting product is processed as described in Example 2 until sheets having a density of 18 g/l are obtained.

The thermal conductivity proved to be 32.5 mW/mK.

Some of the sheets, obtained as described in Example 1, are put in an oven at 70°C for 2 days. Test samples are then collected (9cm x 19cm x 2cm) for the fire behaviour test according to the regulation DIN 4102. The test samples pass the test. The sheet was subjected to the lamp test for 10' at a distance of 44 cm from the lamp: no deformation was observed.

### EXAMPLE 5

947.8 parts of polystyrene N1782 produced by Polimeri Europa; 13 parts of graphite UF2 produced by Graphit Kropfmuehl AG; 2.2 parts of the CaCO₃ used in Example 1; 20 parts of the mixture of polyphenyl oxide and polystyrene Noryl N110 produced by General Electric; 15 parts of hexabromocyclododecane Saytex HP900 produced by Albemarle and 2 parts of Perkadox 30® (2,3-dimethyl-2,3-diphenylbutane) sold by Akzo Nobel, are mixed in a twin-screw extruder.

A gear pump increases the pressure of the mixture thus composed to 250 barg.

50 parts of a mixture of n-pentane (75%) and iso-pentane (25%) are then pressurized and injected into the polymeric composition downstream of the gear pump. The components are then mixed by means of static mixers, at a temperature of about 190°C.

The product is cooled to 180°C by means of a heat exchanger, and subsequently granulated and processed as described in Example 2, until sheets having a density of 18 g/l are obtained.

The thermal conductivity proved to be 32 mW/mK.

Some of the sheets, obtained as described in Example 1, are put in an oven at 70°C for 2 days. A sheet was subjected to the lamp test for 10' at a distance of 44 cm from the lamp: no deformation was observed.

### Comparative example 2

Example 5 is repeated, but substituting the 20 parts of Noryl N110 with an equal quantity of polystyrene N1782. The product is cooled to 180°C by means of a heat exchanger, and subsequently granulated and processed as described in Example 5, until sheets having a density of 18 g/l are obtained.

The thermal conductivity proved to be 32 mW/mK.

Test samples are then collected (9cm x 19cm x 2cm) for the fire behaviour test according to the regulation DIN 4102. The test samples pass the test. The sheet was subjected to the lamp test for 10' at a distance of 44 cm from the lamp: a deformation of the test sample was observed, revealing damage equal to about 2,000 mm³.

### Comparative example 3

Example 5 is repeated, but using the following polymeric mixture: 935 parts of polystyrene N1782 produced by Polimeri Europa; 35 parts of graphite UF2; 25 parts of hexabromocyclododecane Saytex HP900 produced by Albemarle and 5 parts of Perkadox 30® (2,3-dimethyl-2,3-diphenylbutane), sold by Akzo Nobel. The product is cooled to 180°C by means of a heat exchanger, and subsequently granulated and processed as described in Example 6, until sheets having a density of 18 g/l are obtained.

The thermal conductivity proved to be 30 mW/mK.

Test samples are then collected (9cm x 19cm x 2cm) for the fire behaviour test according to the regulation DIN 4102. The test samples pass the test. The sheet was subjected to the lamp test for 10' at a distance of 44 cm from the lamp: a significant deformation of the test sample was observed, revealing damage equal to about 6,000 mm³.

## Claims

1. Expanded articles for thermal insulation with improved resistance to solar irradiation which comprise an expanded polymeric matrix, obtained by expansion and sintering of beads/granules of a vinyl aromatic (co)polymer, in whose interior a filler is homogeneously dispersed, which comprises:
a. 0.1-10% by weight, preferably 0.2-3%, of coke having an average diameter (MT50) ranging from 2 to 20 µm and/or synthetic, natural or expanded graphite having an average diameter (MT50) ranging from 1 to 20 µm;
b. 0-5% by weight, preferably 0.1-2%, of a self-extinguishing brominated additive possibly thermally stabilized;
c. 0-2% by weight, preferably 0.1-1.3%, of a synergist for the self-extinguishing additive (b);
d. 0-10% by weight, preferably 0.15-6%, of at least one inorganic additive active within the wave-lengths ranging from 100 to 20,000 cm⁻¹;
e. 1-10% by weight, preferably 1.5-8%, of an expanding agent;
wherein said percentages are calculated with respect to the overall weight of the bead/granule and wherein the complement to 100% is a polymeric matrix (f) consisting of (f1) a copolymer of styrene and from 0.01 to 15% by weight, with respect to the copolymer, of at least one vinyl aromatic comonomer substituted in the ring or on the vinyl group and/or (f2) a mixture of polystyrene and a thermoplastic polymer compatible with polystyrene and having a Tg (glass transition temperature) > 100°C.

2. The expanded articles according to claim 1, consisting of flat sheets for thermo-insulation in the building industry, having a density ranging from 8 to 50 g/l and a thickness of 1 to 50 cm.

3. Expanded articles consisting of expanded extruded sheets of vinyl aromatic polymers comprising a continuous cellular matrix consisting of:
(f1) a vinyl aromatic copolymer comprising styrene and at least one vinyl aromatic comonomer substituted in the ring or on the vinyl; and/or
(f2) a mixture of polystyrene and a thermoplastic polymer compatible with polystyrene and having a Tg (glass transition temperature) > 100°C,
wherein said expanded sheet has a density ranging from 10 to 200 g/l, an average cell dimension of the cellular matrix ranging from 0.05 to 1.00 mm and comprises the filler from (a) to (d) in the quantities described in claim 1.

4. The expanded articles according to claim 1, wherein the comonomer is selected from α-methylstyrene and para-methylstyrene.

5. The expanded articles according to any of the previous claims, wherein the thermoplastic polymer compatible with the polystyrene and having a Tg > 100°C is up to 10% by weight, with respect to the polymeric mixture (f2).

6. The expanded articles according to claim 5, wherein the compatible thermoplastic polymer is polyphenylene-oxide.

7. The expanded articles according to any of the previous claims, wherein the inorganic additive (d) comprises an inorganic material which has at least an absorption band between 100 and 20,000 cm⁻¹, as revealed by a spectrum analyzer in the near and medium infrared, and is selected from titanates, titanium oxides, silicon oxide, such as aerosilica and silica flour, aluminum oxides and hydroxides, barium sulfate, silicates such as alumino-silicates, calcium silicates and magnesium silicates, carbonates such as calcium and/or magnesium carbonate, calcium sulfates, calcium and zinc oxide, bentonite.

8. Beads/granules based on expandable vinyl aromatic polymers suitable for preparing the expanded articles according to claims 1 to 7, which comprise:
A. a vinyl aromatic polymeric matrix essentially consisting of:
- a copolymer of styrene and from 0.01 to 15% by weight, with respect to the copolymer, of at least one vinyl aromatic comonomer substituted in the ring or on the vinyl group (f1) and/or
- a mixture of polystyrene and a thermoplastic polymer compatible with polystyrene and having a Tg (glass transition temperature) > 100°C (f2); and
B. a filler comprising:
a. 0.1-10% by weight, preferably 0.2-3%, of coke having an average diameter (MT50) ranging from 2 to 20 µm and/or synthetic, natural or expanded graphite having an average diameter ranging from 1 to 20 µm;
b. 0-5% by weight, preferably 0.1-2%, of a self-extinguishing brominated additive possibly thermally stabilized;
c. 0-2% by weight, preferably 0.2-1.3%, of a synergist for the self-extinguishing additive (b);
d. 0-10% by weight, preferably 0.15-6%, of at least one active inorganic additive within the wave-lengths ranging from 100 to 20,000 cm⁻¹;
e. 1-10% by weight, preferably 1.5-8%, of an expanding agent;
and wherein the percentages are calculated with respect to the total of the composition A and B.

9. The expandable beads/granules according to claim 8, wherein the comonomer is selected from α-methylstyrene and para-methylstyrene.

10. The expandable beads/granules according to any of the claims from 8 to 9, wherein the thermoplastic polymer compatible with polystyrene and having a Tg > 100°C ranges up to 10% by weight, with respect to the polymeric mixture (f2).

11. The expandable beads/granules according to claim 10, wherein the compatible thermoplastic polymer is polyphenylene-oxide.

12. A process for the preparation of beads or granules according to any of the claims from 8 to 11, which comprises the dissolution/dispersion of the filler (a)-(d) in the monomeric phase, followed by polymerization in aqueous suspension and addition of the expanding agent (e).

13. A process for the preparation of beads or granules according to any of the claims from 8 to 11, which comprises:
I. mixing the vinyl aromatic (co)polymer in granules or already in the molten state, with an average molecular weight Mw ranging from 50,000 to 250,000, preferably from 70,000 to 200,000, with the filler (a)-(d) and optionally with the compatible polymer and/or further additives;
II. optionally, if not already in the molten state, bring the polymeric mixture to a temperature higher than the melting point of the vinyl aromatic (co)polymer.
III. incorporating the expanding agent (e) and possibly a part of or all of said further additives, in the molten mixture;
IV. mixing the polymeric composition thus obtained by means of static or dynamic mixing elements; and
V. granulating the composition thus obtained in a device which comprises a die, a cutting chamber and a cutting system.

## Patentansprüche

1. Expandierte Gegenstände für thermische Isolierung mit verbesserter Resistenz gegenüber Sonnenstrahlung, welche eine expandierte Polymermatrix umfassen, erhalten durch Expansion und Sinterung von Perlen/Granulen eines vinylaromatischen (Co)Polymers, in dessen Inneren ein Füllstoff homogen verteilt ist, welches umfasst:
a. 0,1 bis 10 Gew.-%, vorzugsweise 0,2 bis 3 Gew.-%, Koks mit einem durchschnittlichen Durchmesser (MT50) im Bereich von 2 bis 20 µm; und/oder synthetisches, natürliches oder expandiertes Graphit mit einem durchschnittlichen Durchmesser (MT50) in einem Bereich von 1 bis 20 µm;
b. 0 bis 5 Gew.-%, vorzugsweise 0,1 bis 2 Gew.-%, eines selbstlöschenden bromierten Additivs, gegebenenfalls thermisch stabilisiert;
c. 0 bis 2 Gew.-%, vorzugsweise 0,1 bis 1,3 Gew.-%, eines Synergisten für das selbstlöschende Additiv (b);
d. 0 bis 10 Gew.-%, vorzugweise 0,15 bis 6 Gew.-%, mindestens eines anorganischen Additivs, aktiv innerhalb eines Wellenlängenbereichs von 100 bis 20.000 cm⁻¹;
e. 1 bis 10 Gew.-%, vorzugsweise 1,5 bis 8 Gew.-%, eines Expandiermittels;
worin die Prozentsätze berechnet sind mit Bezug auf das Gesamtgewicht der Perlen/Granulen und worin der Ausgleich auf 100% eine Polymermatrix (f) ist, bestehend aus (f1) einem Copolymer aus Styren und von 0,01 bis 15 Gew.-%, bezogen auf das Copolymer, mindestens eines vinyl-aromatischen Comonomers, substituiert in dem Ring oder auf der Vinylgruppe, und/oder (f2) einer Mischung aus Poylstyren und einem mit dem Polystyren kompatiblen thermoplastischen Polymer und mit einer Tg (Glasübergangstemperatur) > 100°C.

2. Expandierte Gegenstände gemäß Anspruch 1, bestehend aus flachen Schichten zur Thermoisolierung in der Bauindustrie mit einer Dichte in einem Bereich von 8 bis 50 g/l und einer Dicke von 1 bis 50 cm.

3. Expandierte Gegenstände, bestehend aus expandierten, extrudierten Schichten aus vinyl-aromatischen Polymeren, umfassend eine kontinuierliche Zellmatrix, bestehend aus:
(f1) einem vinyl-aromatischen Copolymer, umfassend Styren und mindestens ein vinyl-aromatisches Comonomer, substituiert im Ring oder auf dem Vinyl; und/oder
(f2) einer Mischung aus Polystyren und einem mit dem Polystyren kompatiblen thermoplastischen Polymer und mit einer Tg (Glasübergangstemperatur) > 100°C,
worin die expandierte Schicht eine Dichte in einem Bereich von 10 bis 200 g/l, eine durchschnittliche Zelldimension der Zellmatrix in einem Bereich von 0,05 bis 1,00 mm hat und den Füllstoff aus (a) bis (d) in den in Anspruch 1 angegebenen Mengen umfasst.

4. Expandierte Gegenstände gemäß Anspruch 1, worin das Comonomer ausgewählt ist aus α-Methylstyren und para-Methylstyren.

5. Expandierte Gegenstände gemäß irgendeinem der vorhergehenden Ansprüche, worin das mit dem Polystyren kompatible thermoplastische Polymer mit einer Tg > 100°C bis zu 10 Gew.-% ausmacht, hinsichtlich der polymeren Mischung (f2).

6. Expandierte Gegenstände gemäß Anspruch 5, worin das kompatible thermoplastische Polymer Polyphenylenoxid ist.

7. Expandierte Gegenstände gemäß irgendeinem der vorhergehenden Ansprüche, worin das anorganische Additiv (d) ein anorganisches Material umfasst, das mindestens eine Absorptionsbande zwischen 100 und 20.000 cm⁻¹ hat, wie ermittelt durch ein Spektralanalysator im nahen und mittleren Infrarotbereich und ausgewählt ist aus Titanaten, Titanoxid, Siliciumoxiden, wie beispielsweise Aerosilica und Silicamehl, Aluminiumoxiden und Hydroxiden, Bariumsulfat, Silicate wie beispielsweise Alumino-Silicaten, Calciumsilicaten und Magnesiumsilicaten, Carbonaten wie beispielsweise Calcium- oder Magnesiumcarbonaten, Calciumsulfaten, Calcium- und Zinkoxid, Bentonit.

8. Perlen/Granulen basierend auf expandierbaren vinyl-aromatischen Polymeren geeignet zu Herstellung von expandierten Gegenständen gemäß den Ansprüchen 1 bis 7, welche umfassen:
A. eine vinyl-aromatische Polymermatrix im Wesentlichen bestehend aus:
- einem Polymer bestehend aus Styren und von 0,1 bis 15 Gew.-%, bezogen aus das Copolymer, mindestens eines vinyl-aromatischen Comonomers, substituiert in dem Ring oder auf der Vinyl-Gruppe (f1), und/oder
- eine Mischung aus Polystyren und einem mit Polystyren kompatiblen thermoplastischen Polymer und mit einer Tg (Galsübergangstemperatur) > 100°C (f2); und
B. einen Füllstoff, umfassend:
a. 0,1 bis 10 Gew.-%, vorzugsweise 0,2 bis 3 Gew.-%, Koks mit einem durchschnittlichen Durchmesser (MT50) im Bereich von 2 bis 20 µm; und/oder synthetisches, natürliches oder expandiertes Graphit mit einem durchschnittlichen Durchmesser in einem Bereich von 1 bis 20 µm;
b. 0 bis 5 Gew.-%, vorzugsweise 0,1 bis 2 Gew.-%, eines selbstlöschenden bromierten Additivs, gegebenenfalls thermisch stabilisiert;
c. 0 bis 2 Gew.-%, vorzugsweise 0,2 bis 1,3 Gew.-%, eines Synergisten für das selbstlöschende Additiv (b);
d. 0 bis 10 Gew.-%, vorzugweise 0,15 bis 6 Gew.-%, mindestens eines aktiven anorganischen Additivs, innerhalb eines Wellenlängenbereichs von 100 bis 20.000 cm⁻¹;
e. 1 bis 10 Gew.-%, vorzugsweise 1,5 bis 8 Gew.-%, eines Expandiermittels;
und worin die Prozentsätze im Bezug auf das Gesamtgewicht der Zusammensetzung A und B berechnet sind.

9. Expandierbare Perlen/Granulen gemäß Anspruch 8, worin das Comonomer ausgewählt ist aus α-Methylstyren und para-Methylstyren.

10. Expandierbare Perlen/Granulen gemäß irgendeinem der Ansprüche 8 bis 9, worin das mit dem Polystyren kompatible thermoplastische Polymer mit einer Tg > 100°C in einem Bereich zu 10 Gew.-%, mit Bezug auf die polymere Mischung (f2), vorliegt.

11. Expandierbare Perlen/Granulen gemäß Anspruch 10, worin das kompatible thermoplastische Polymer Polyphenylenoxid ist.

12. Verfahren zur Herstellung von Perlen/Granulen gemäß irgendeinem der Ansprüche 8 bis 11, welches umfasst die Auflösung/Dispersion des Füllstoffs (a) bis (d) in der monomeren Phase, gefolgt von Polymerisierung in wässriger Suspension und Zugabe des Expandiermittels (e).

13. Verfahren zur Herstellung von Perlen/Granulen gemäß irgendeinem der Ansprüche 8 bis 11, welches umfasst:
I. Mischen des vinyl-aromatischen (Co)Polymers in Granulen oder bereits im geschmolzenen Zustand, mit einem mittleren Molekulargewicht Mw in einem Bereich von 50.000 bis 250.000, vorzugsweise von 70.000 bis 200.000, mit dem Füllstoff (a) bis (d) und gegebenenfalls mit dem kompatiblen Polymer und/oder weiteren Additiven;
II. gegebenenfalls, falls bereits im geschmolzenen Zustand, Bringen der Polymermischung auf eine Temperatur größer als der Schmelzpunkt des vinyl-aromatischen (Co)Polymers;
III. Aufnehmen des Expandiermittels (e) und gegebenenfalls eines Teils oder sämtlicher weiterer Additive in die geschmolzene Mischung;
IV. Mischen der so erhaltenen polymeren Zusammensetzung mittels statischer oder dynamischer Mischelemente;
V. Granulierung der so erhaltenen Zusammensetzung in einer Vorrichtung, die eine Düse, eine Schnittkammer und ein Schnittsystem umfasst.

## Revendications

1. Articles expansés pour isolation thermique, dotés d'une résistance améliorée au rayonnement solaire, qui comportent une matrice en polymère expansé, obtenue par expansion et frittage de perles ou granules d'un (co)polymère poly(vinyl-aromatique), à l'intérieur de laquelle est dispersée de manière homogène une charge qui comprend :
a) de 0,1 à 10 % en poids, et de préférence de 0,2 à 3 %, d'un coke présentant un diamètre moyen de particules (MT50) valant de 2 à 20 µm, et/ou d'un graphite synthétique, naturel ou expansé présentant un diamètre moyen de particules (MT50) valant de 1 à 20 µm,
b) de 0 à 5 % en poids, et de préférence de 0,1 à 2 %, d'un adjuvant bromé auto-extinguible, éventuellement stabilisé vis-à-vis de la chaleur,
c) de 0 à 2 % en poids, et de préférence de 0,1 à 1,3 %, d'un agent synergique pour l'adjuvant auto-extinguible (b),
d) de 0 à 10 % en poids, et de préférence de 0,15 à 6 %, d'au moins un adjuvant inorganique actif dans la gamme de longueurs d'onde allant de 100 à 20 000 cm⁻¹,
e) et de 1 à 10 % en poids, et de préférence de 1,5 à 8 %, d'un agent d'expansion,
étant entendu que ces pourcentages sont rapportés au poids total de la perle ou du granule et que le complément à 100 % est
f) une matrice polymère constituée
f1) d'un copolymère de styrène et de 0,01 à 15 % en poids, par rapport au copolymère, d'au moins un comonomère vinyl-aromatique portant un substituant placé sur le cycle ou sur le groupe vinyle,
f2) et/ou d'un mélange de polystyrène et d'un polymère thermoplastique compatible avec le polystyrène et présentant une température de transition vitreuse Tv supérieure à 100 °C.

2. Articles expansés conformes à la revendication 1, consistant en des plaques planes d'isolation thermique pour l'industrie du bâtiment, dont la masse volumique vaut de 8 à 50 g/L et l'épaisseur vaut de 1 à 50 cm.

3. Articles expansés consistant en des feuilles extrudées et expansées de polymères poly(vinyl-aromatique), comprenant une matrice alvéolaire continue constituée
f1) d'un copolymère poly(vinyl-aromatique) comprenant du styrène et au moins un comonomère vinyl-aromatique portant un substituant placé sur le cycle ou sur le groupe vinyle,
f2) et/ou d'un mélange de polystyrène et d'un polymère thermoplastique compatible avec le polystyrène et présentant une température de transition vitreuse Tv supérieure à 100 °C,
étant entendu que ces feuilles expansées présentent une masse volumique de 10 à 200 g/L et une taille moyenne des alvéoles de la matrice alvéolaire de 0,05 à 1,00 mm, et contiennent les charges (a) à (d) en les proportions indiquées dans la revendication 1.

4. Articles expansés conformes à la revendication 1, dans lesquels le comonomère est choisi parmi l'alpha-méthyl-styrène et le para-méthyl-styrène.

5. Articles expansés conformes à l'une des revendications précédentes, dans lesquels le polymère thermoplastique compatible avec le polystyrène et présentant une température de transition vitreuse Tv supérieure à 100 °C se trouve en une proportion valant jusqu'à 10 % en poids, par rapport au mélange de polymères (f2).

6. Articles expansés conformes à la revendication 5, dans lesquels le polymère thermoplastique compatible est un poly(oxyde de phénylène).

7. Articles expansés conformes à l'une des revendications précédentes, dans lesquels l'adjuvant inorganique (d) comprend un matériau inorganique qui présente au moins une bande d'absorption entre 100 et 20 000 cm⁻¹, révélée par analyse de son spectre dans le proche infrarouge et le moyen infrarouge, et est choisi parmi les titanates, les oxydes de titane, l'oxyde de silicium, comme de la silice de pyro-hydrolyse et de la silice finement broyée, les oxydes et hydroxydes d'aluminium, le sulfate de baryum, les silicates comme les alumino-silicates, silicates de calcium et silicates de magnésium, les carbonates comme les carbonates de calcium et/ou de magnésium, les sulfates de calcium, les oxydes de calcium et de zinc, et la bentonite.

8. Perles ou granules à base de polymères poly(vinyl-aromatique) expansibles, destinés à la production d'articles expansés conformes à l'une des revendications 1 à 7, qui comprennent :
A) une matrice en polymère poly(vinyl-aromatique), essentiellement constituée
- d'un copolymère de styrène et de 0,01 à 15 % en poids, par rapport au copolymère d'au moins un comonomère vinyl-aromatique portant un substituant placé sur le cycle ou sur le groupe vinyle (f1),
- et/ou d'un mélange de polystyrène et d'un polymère thermoplastique compatible avec le polystyrène et présentant une température de transition vitreuse Tv supérieure à 100 °C (f2),
B) et une charge comprenant :
a) de 0,1 à 10 % en poids, et de préférence de 0,2 à 3 %, d'un coke présentant un diamètre moyen de particules (MT50) valant de 2 à 20 µm, et/ou d'un graphite synthétique, naturel ou expansé présentant un diamètre moyen de particules (MT50) valant de 1 à 20 µm,
b) de 0 à 5 % en poids, et de préférence de 0,1 à 2 %, d'un adjuvant bromé auto-extinguible, éventuellement stabilisé vis-à-vis de la chaleur,
c) de 0 à 2 % en poids, et de préférence de 0,2 à 1,3 %, d'un agent synergique pour l'adjuvant auto-extinguible (b),
d) de 0 à 10 % en poids, et de préférence de 0,15 à 6 %, d'au moins un adjuvant inorganique actif dans la gamme de longueurs d'onde allant de 100 à 20 000 cm⁻¹,
e) et de 1 à 10 % en poids, et de préférence de 1,5 à 8 %, d'un agent d'expansion,
étant entendu que ces pourcentages sont rapportés au total des composants A et B de la composition.

9. Perles ou granules expansibles, conformes à la revendication 8, dans lesquels le comonomère est choisi parmi l'alpha-méthyl-styrène et le para-méthyl-styrène.

10. Perles ou granules expansibles, conformes à l'une des revendications 8 à 9, dans lesquels le polymère thermoplastique compatible avec le polystyrène et présentant une température de transition vitreuse Tv supérieure à 100 °C se trouve en une proportion valant jusqu'à 10 % en poids, par rapport au mélange de polymères (f2).

11. Perles ou granules expansibles, conformes à la revendication 10, dans lesquels le polymère thermoplastique compatible est un poly-(oxyde de phénylène).

12. Procédé de préparation de perles ou granules conformes à l'une des revendications 8 à 11, qui comporte le fait de dissoudre ou disperser les charges (a) à (d) dans la phase de monomère(s), opération suivie d'une polymérisation en suspension aqueuse et de l'addition d'un agent d'expansion (e).

13. Procédé de préparation de perles ou granules conformes à l'une des revendications 8 à 11, qui comporte les opérations suivantes :
I) mélanger un (co)polymère poly(vinyl-aromatique), en granules ou déjà à l'état fondu, présentant une masse molaire moyenne Mw valant de 50 000 à 250 000 et de préférence de 70 000 à 200 000, avec les charges (a) à (d), et en option, avec le polymère compatible et/ou d'autres adjuvants;
II) en option, s'il n'est pas déjà à l'état fondu, porter le mélange de polymères à une température supérieure au point de fusion du (co)polymère poly(vinyl-aromatique) ;
III) incorporer dans le mélange fondu l'agent d'expansion (e) et éventuellement, tout ou partie desdits autres adjuvants;
IV) mélanger la composition de polymères ainsi obtenue à l'aide de moyens de mélange statiques ou dynamique;
V) et réduire en granules la composition ainsi obtenue, dans un dispositif comprenant une filière, une chambre de coupe et un système de coupe.
